# EUROPEAN PATENT APPLICATION

(11) **EP 1 551 170 A2**
(43) Date of publication of application: **06.07.2005**
(21) Application number: 05075001.7
(22) Date of filing: 03.01.2005
(51) Int. Cl.: H04N 5/21

(54) **Image processing apparatus and method**

(30) Priority: 02.01.2004 KR 2004000009
(71) Applicant: LG Electronics Inc., Seoul 150-875 (KR)
(72) Inventor: Lee, Hyun Bae, Dongan-gu Anyang-si Kyunggi-do (KR); Kim, Yu Nam, Sungbook-gu Seoul (KR); Byun, Seong Chan, Mapo-gu Seoul (KR)
(74) Representative: Ekström, Nils

(57) **Abstract**

Provided is an image processing apparatus and method for providing a more defined high-illuminance image, by converting a low-illuminance image into a high-illuminance image and at the same time, extracting the low-luminance level of the low-luminance image and differentiating an eliminated degree of the noise depending on the extracted low-illuminance level.

## Description

### BACKGROUND OF THE INVENTION

### Field of the Invention

The present invention relates to an image processing apparatus and method, and more particularly, to an image processing apparatus and method in which a digital high-definition image can be provided in a low-illuminance environment. Much more particularly, the present invention relates to an image processing apparatus and method in which a noise is selectively eliminated depending on a low-illuminance level of a low-illuminance image to provide an optimal image.

### Description of the Related Art

Recently, a demand for a digital image processing apparatus including a digital camcorder, a camera phone and the like is being rapidly increased. Meanwhile, as a resolution supported when a still image or a mobile image is captured by the image processing apparatus is gradually upgraded, a user is satisfied to some degrees with the image captured in a common environment, that is, in a high-illuminance environment being under illumination such as a daylight or a fluorescent lamp.

However, the user increasingly desires to capture the image with a secured picture quality even in a low-illuminance environment such as theater's interior, dark room and night as well as in the common environment. For example, when it is intended to capture an image of one's favorite enthusiastic star at a concert or a sea background at night, a low-illuminance image is picked-up to have a low brightness unlike a common image. However, the user cannot almost view the low-illuminance image with naked eyes, the low-luminance image is not preferable.

In a conventional image processing apparatus, a flash is set at the low-illuminance environment to change the low-illuminance environment into the high-illuminance environment by using a momentary light, and then a desired image is captured. However, the conventional image processing apparatus has a drawback in that if the flash is not set, the image cannot be captured in the low-illuminance environment, and the flash cannot be used due to an anxiety of momentary light's hindering to others at public places such as the theater's interior. Accordingly, the conventional image processing apparatus has a drawback in that it is not easy to capture the image in the low-illuminance environment, and even though the image is captured, a defined image cannot be obtained due to the low-illuminance environment.

Further, a method of uniformly increasing a luminance of an image, which is picked-up using an image pickup sensor, to convert the picked-up image into a high-illuminance image has been proposed. However, the method has a drawback in that since a noise of the low-illuminance image is increased, the high-illuminance image brings about another problem due to noise amplification.

### SUMMARY OF THE INVENTION

Accordingly, the present invention is directed to an image processing apparatus and method that substantially obviates one or more problems due to limitations and disadvantages of the related art.

An object of the present invention is to provide an image processing apparatus and method in which an image captured in a low-illuminance environment is corrected and noise-eliminated to provide a high-definition image.

Another object of the present invention is to provide an image processing apparatus and method in which a noise elimination way can be automatically selected and applied in an adaptive method depending on a illuminance level, to optimally eliminate a noise depending on an illuminance environment.

A further object of the present invention is to provide an image processing and method in which an image can be processed using software without a flash and the like, to provide a high-definition image without hindering to others.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided an image processing apparatus including: an image correcting unit for correcting a low-illuminance image by using a histogram smoothing; and an image noise eliminating unit for selectively eliminating a noise from the corrected image depending on a low-illuminance level of the low-illuminance image.

In another aspect of the present invention, there is provided an image processing method including the steps of: correcting a low-illuminance image by using a histogram smoothing; and selectively eliminating a noise from the corrected image depending on a low-illuminance level of the low-illuminance image.

The present invention has an advantage in that the noise is adaptively eliminated depending on an illuminance level to more improve a definition of the low-illuminance image.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating an image processing apparatus according to a preferred embodiment of the present invention;

FIG. 2 is a detailed block diagram illustrating a construction of an image noise eliminating unit of FIG. 1;

FIG. 3 is a flowchart illustrating an image processing method according to a preferred embodiment of the present invention;

FIG. 4 is a flowchart illustrating the step S24 of FIG. 3;

FIG. 5 is a graph illustrating a histogram distribution for a low-illuminance image;

FIG. 6 is a view illustrating a histogram distribution for a high-illuminance image after a histogram is smoothed;

FIG. 7 is an example of an image before a histogram is smoothed; and

FIG. 8 is an example of an image after a histogram is smoothed.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

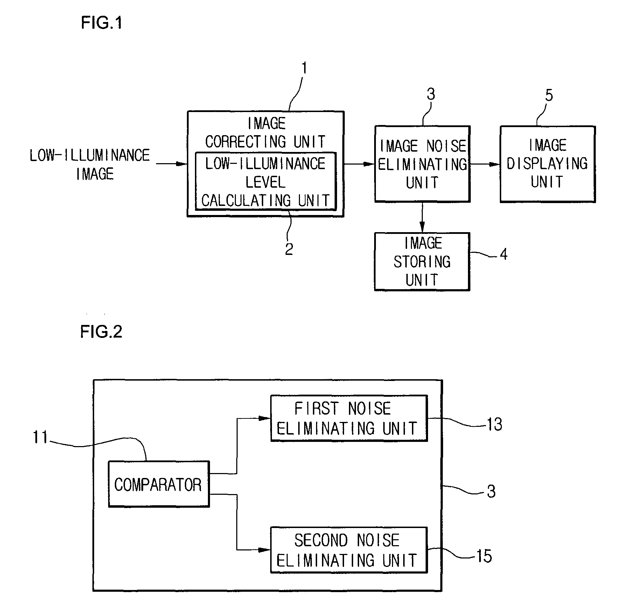

FIG. 1 is a block diagram illustrating an image processing apparatus according to a preferred embodiment of the present invention, and FIG. 2 is a detailed block diagram illustrating a construction of an image noise eliminating unit of FIG. 1.

Referring to FIGS. 1 and 2, the inventive image processing apparatus includes an image correcting unit 1 for correcting a low-illuminance image; an image noise eliminating unit 3 for eliminating a noise from the corrected image; an image storing unit 4 for storing the noise-eliminated image; and an image displaying unit 5 for displaying the noise-eliminated image. Here, the low-illuminance image means an image captured and inputted in the low-illuminance environment.

At this time, the low-illuminance image can be captured using an image pickup sensor such as a Charge Coupled Device (CCD), a Complementary Metal Oxide Semiconductor (CMOS) or the like.

Further, when the image is captured in the low-illuminance environment without illumination, the image correcting unit 1 can correct the low-illuminance image into a high-illuminance image on the basis of software, up to a suitable level for viewing with naked eyes, even without an additional illuminating device such as a flash and the like. That is, the image correcting unit 1 corrects the inputted low-illuminance image into the high-illuminance image by using a histogram smoothing.

Here, the histogram smoothing is a technique in which when a gray level distribution of the image is limited to a predetermined gray level, a histogram is smoothed to improve a brightness of the image.

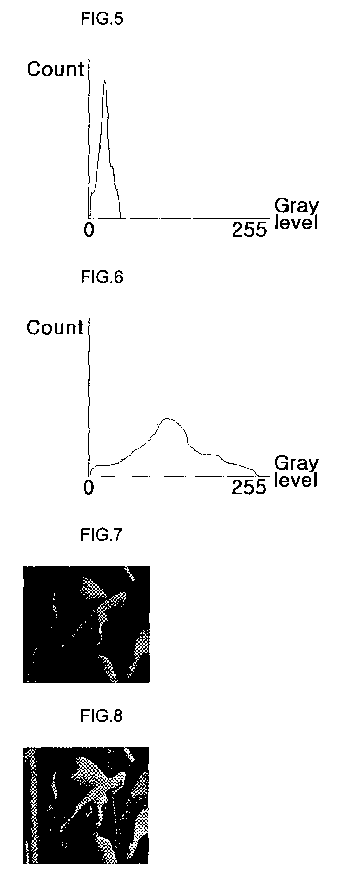

Hereinafter, the histogram smoothing is described. As shown in FIG. 5, the histogram distribution for the low-illuminance image is mainly distributed at a low gray level range. At this time, if the histogram smoothing is performed, the low-illuminance image relatively more distributed at the low gray level range is rearranged and expansively distributed at a whole gray level range of 0 to 255. Accordingly, if the histogram smoothing is performed, the low-illuminance image such as dark background and object images is corrected and converted into a distinguishable image.

FIG. 6 is a view illustrating the histogram distribution for the high-illuminance image after the histogram is smoothed.

FIG. 7 is an example of the image before the histogram is smoothed, and FIG. 8 is an example of the image after the histogram is smoothed.

As shown in FIGS. 7 and 8, the histogram-smoothed image is more defined than the original low-illuminance image.

As such, the low-illuminance image is corrected into the high-illuminance image by the image correcting unit 1 to provide a more defined image.

Meanwhile, the low-illuminance image generally has an originally added noise. If such the low-illuminance image is converted into the high-illuminance image through the histogram smoothing, the noise originally added to the low-illuminance image is also amplified.

As a result, the more defined image can be provided by the image correcting unit 1, but there is a drawback in that the noise is more worsen than before the image is corrected. For this, the present invention further includes the image noise eliminating unit 3.

The image noise eliminating unit 3 eliminates the noise by a low-illuminance level of the low-illuminance image. Additionally, the low-illuminance level is calculated in the image correcting unit 1. The image correcting unit 1 can further include a low-illuminance level calculating unit 2 for calculating the low-illuminance level of the low-illuminance image. Therefore, the image correcting unit 1 corrects the low-illuminance image and at the same time, calculates the low-illuminance level of the low-illuminance image. However, the low-illuminance level calculating unit 2 can be also disposed, as a separate block, before and after the image correcting unit 1, not inside of the image correcting unit 1.

Here, the low-illuminance level refers to an evaluated value of the brightness of the predetermined low-illuminance image. That is, the low-illuminance level refers to quantitative information expressing a light and shade.

At this time, the low-illuminance level can be calculated using one of the following three methods. Of course, a different method can be also proposed.

First, the low-illuminance level can be calculated as a mean value of the histogram distribution of luminance being one of all image information.

Second, the low-illuminance level can be calculated as a minimal luminance provided at a predetermined rate of a whole histogram distribution, when considering from a higher luminance of the histogram distribution of the luminance.

Third, the low-illuminance level can be calculated as a maximal luminance provided at a predetermined rate of the whole histogram distribution, when considering from a lower luminance of the histogram distribution of the luminance.

The low-illuminance level is inputted together with the corrected image to the image noise eliminating unit 3.

As shown in FIG. 2, the image noise eliminating unit 3 includes a comparator 11, a first noise eliminator 13 and a second noise eliminator 15.

In detail, the comparator 11 compares the inputted low-illuminance level with a preset critical value to provide the comparative result to the first noise eliminator 13 or the second noise eliminator 15, thereby eliminating the noise differently.

At this time, the critical value is set to 120 when the low-illuminance level is calculated depending on the first method, or is set to 80 when the low-illuminance level is calculated depending on the second method, or is set to 150 when the low-illuminance level is calculated depending on the third method. Of course, the critical value is experimentally set to provide the most excellent performance, and can be also set to a value other than 120, 80 and 150.

As a comparative result of the comparator 11, if is determined that the low-illuminance level is less than the critical value, the comparative result value is provided to the second noise eliminator 15. To the contrary, if it is determined that the low-illuminance level is more than the critical value, the comparative result value is provided to the first noise eliminator 13.

Therefore, the first noise eliminator 13 receives the image with the low-illuminance level being more than the critical value, and relatively less eliminates the noise from the corrected image. To the contrary, the second noise eliminator 15 receives the image with the low-illuminance level being less than the critical value, and relatively more eliminates the noise from the corrected image.

Such the process is performed because the noise of the image with a large low-illuminance level is relatively less amplified when the histogram smoothing is performed, and to the contrary, the noise of the image with a small low-illuminance level is more amplified when the histogram smoothing is performed. As a result, a magnitude of the amplified noise of the corrected image can be known from a comparative result of comparing the low-illuminance level with the critical value.

In order to allow the noise eliminators 13 and 15 to perform a suitable operation, the first noise eliminator 13 can use a median filter, and the second noise filter 15 can use a mean filter. Accordingly, the first noise eliminator 13 can relatively less eliminate the noise from the corrected image, and the second noise eliminator 15 can more eliminate the noise from the corrected image. Meanwhile, an eliminated degree of the noise can be different at the first and second noise eliminators 13 and 15 by using a method using a separate mask.

By such a function of the image noise eliminating unit 3, the noise is relatively more eliminated from the image with a greatly amplified noise, to greatly reduce the noise despite a little loss of a high frequency component being an edge component of the object. Whereas, the noise is relatively less eliminated from the image with a little amplified noise, to maintain edge information of the object as it is.

The noise-eliminated image is stored in the image storing unit 4 according to a user's storage request.

In the absence of the user's storage request, the image displaying unit 5 displays the nose-eliminated image on a screen for a user.

According to the image processing apparatus, the noise can be selectively eliminated depending on the low-illuminance level of the low-illuminance image. Therefore, the more defined image can be obtained.

The image processing apparatus can be easily applied to a portable display equipment such as a camera phone, a digital camera, a digital camcorder, a personal portable terminal or a smart phone to provide the more defined image. Specifically, at least the image noise eliminating unit 3 is applied to the display equipment to much more improve the definition of the image.

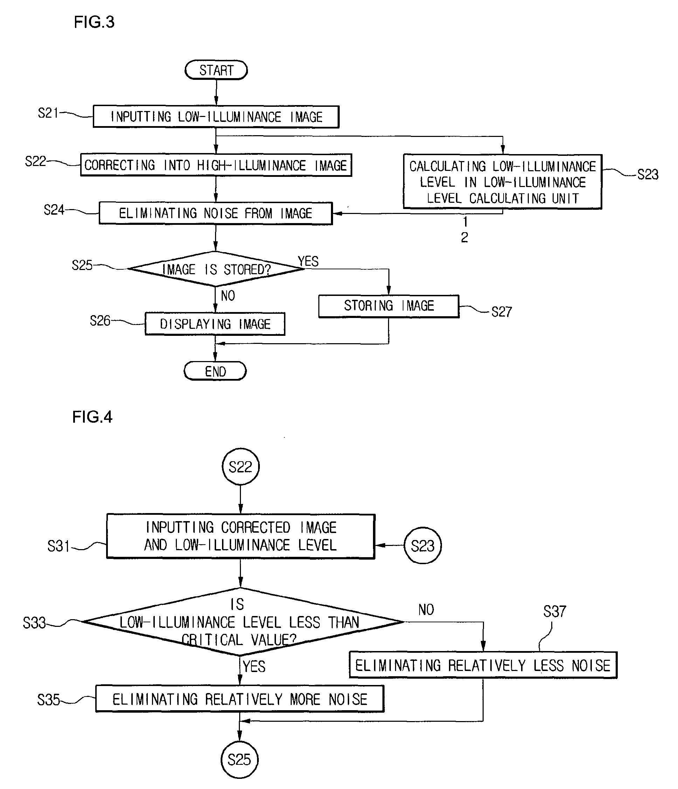

FIG. 3 is a flowchart illustrating an image processing method according to a preferred embodiment of the present invention, and FIG. 4 is a flowchart illustrating the step S24 of FIG. 3.

Referring to FIGS. 3 and 4, the low-illuminance image, which is captured using the image pickup sensor such as CCD or CMOS in the low-illuminance environment, is inputted (S21).

The histogram smoothing for the inputted low-illuminance image is performed to correct the high-illuminance image (S22). The low-illuminance image is corrected and at the same time, the low-illuminance level of the low-illuminance image is calculated by one of the above-described three methods on the basis of the inputted low-illuminance image (S23).

The noise of the corrected image is selectively eliminated using the low-illuminance level (S24).

In detail describing the selective noise eliminating step (S24) with reference to FIG. 4, first, the corrected image and the calculated low-illuminance level are inputted (S31).

It is determined whether or not the inputted low-illuminance level is less than the predetermined critical value (S33).

Additionally, as the comparative result, if it is determined that the low-illuminance level is less than the critical value, the mean filter is used to relatively more eliminate the noise from the corrected image (S35). However, as the comparative result, it is determined that the low-illuminance level is more than the critical value, the median filter is used to relatively less eliminate the noise from the corrected image (S37).

As such, an amplified degree of the noise, that is, the low-illuminance level of the low-illuminance image is detected to differently eliminate the noise, so that the noise is more perfectly eliminated while the defined image can be obtained.

Referring again to FIG. 3, according to the user's storage request (S25), the noise-eliminated image is stored in the memory in a storage mode (S27). On the contrary, in the absence of the user's storage request, the noise-eliminated image is displayed on the screen in a preview mode (S26).

As described above, in the inventive image processing apparatus and method, the image captured in the low-illuminance environment is corrected into the high-illuminance image and then, the amplified noise is differently eliminated depending on the amplified degree of the noise to provide the more defined image.

Further, in the inventive image processing apparatus and method, the noise elimination way is selectively applied depending on the illuminance level to more optimally eliminate the noise, thereby providing the optimal defined image.

It will be apparent to those skilled in the art that various modifications and variations can be made in the present invention. Thus, it is intended that the present invention covers the modifications and variations of this invention provided they come within the scope of the appended claims and their equivalents.

## Claims

1. An image processing apparatus, being **characterized by** comprising:
an image correcting unit for correcting a low-illuminance image by using a histogram smoothing; and
an image noise eliminating unit for selectively eliminating a noise from the corrected image depending on a low-illuminance level of the low-illuminance image.

2. The apparatus according to claim 1, being **characterized in that** the low-illuminance image is captured and inputted in a low-illuminance environment.

3. The apparatus according to claim 1, being **characterized in that** in the histogram smoothing allows the low-illuminance image relatively more distributed at a low gray level range to be rearranged and distributed at all gray level ranges.

4. The apparatus according to claim 1, being **characterized in that** the image noise eliminating unit comprises:
a comparator for comparing the low-illuminance level with a critical value;
a first noise eliminator for relatively less eliminating the noise in case where the low-illuminance level is more than the critical value; and
a second noise eliminator for relatively more eliminating the noise in case where the low-illuminance level is less than the critical value.

5. The apparatus according to any one of preceding claims 1 to 4, being **characterized in that** the first noise eliminator is a median filter, and the second noise eliminator is a mean filter.

6. The apparatus according to any one of preceding claims 1 to 4, being **characterized in that** it further comprises an image displaying unit for displaying the noise-eliminated image in a preview mode.

7. The apparatus according to any one of preceding claims 1 to 4, being **characterized in that** it further comprises an image storing unit for storing the noise-eliminated image in a storage mode.

8. The apparatus according to any one of preceding claims 1 to 4, being **characterized in that** at least the image noise eliminating unit is applied to a camera phone, a digital camera, a digital camcorder, a personal portable terminal or a smart phone.

9. The apparatus according to any one of preceding claims 1 to 4, being **characterized in that** the image correcting unit has a low-illuminance level calculating unit for calculating the low-illuminance level.

10. An image processing method, being **characterized by** comprising the steps of:
correcting a low-illuminance image by using a histogram smoothing; and
selectively eliminating a noise from the corrected image depending on a low-illuminance level of the low-illuminance image.

11. The method according to claim 10, being **characterized in that** the low-illuminance level is calculated as a mean value of a histogram distribution of luminance being one of all image information.

12. The method according to claim 10, being **characterized in that** the low-illuminance level is calculated as a minimal luminance provided at a predetermined rate of a whole histogram distribution, when considering from a higher luminance of a histogram distribution of luminance being one of all image information.

13. The method according to claim 10, being **characterized in that** the low-illuminance level is calculated as a maximal luminance provided at a predetermined rate of a whole histogram distribution, when considering from a lower luminance of a histogram distribution of luminance being one of all image information.

14. The method according to any one of preceding claims 10 to 13, being **characterized in that** the image noise eliminating comprises the steps of:
comparing the low-illuminance level with a critical value;
relatively less eliminating the noise in case where the low-illuminance level is more than the critical value; and
relatively more eliminating the noise in case where the low-illuminance level is less than the critical value.

15. The method according to any one of preceding claims 10 to 13, being **characterized in that** in the correcting step, the low-illuminance level is calculated.
